Europäisches Patentamt

(19) European Patent Office

Office européen des brevets

(11) Publication number: **0 074 778**
**A1**

(12) **EUROPEAN PATENT APPLICATION**

(21) Application number: **82304675.0**

(22) Date of filing: **07.09.82**

(51) Int. Cl.³: **A 01 B 49/02**

(30) Priority: **12.09.81 GB 8127599**

(43) Date of publication of application:
**23.03.83 Bulletin 83/12**

(84) Designated Contracting States:
**DE FR IT NL**

(71) Applicant: **Riach, Allan**
**Ayton Mains**
**Eyemouth Berwickshire(GB)**

(72) Inventor: **Riach, Allan**
**Ayton Mains**
**Eyemouth Berwickshire(GB)**

(74) Representative: **Waite, Anthony William et al,**
**Marks & Clerk Alpha Tower Suffolk Street Queensway**
**Birmingham B1 1TT(GB)**

(54) Soil working apparatus.

(57) A soil working apparatus has a pair of relatively pivotable frames (1) and (2). The front frame (1) carries a plurality of plough blades (10) and the rear frame (2) carries first and second rotary devices (11) and (15) for breaking up soil loosened by the blades (10). The devices (11) and (15) are driven in rotation from a gearbox (20), usually at different speeds relative to each other and to the speed of movement of the apparatus along the ground. The apparatus can be used to produce a seed bed in a single pass from land which has been previously harvested.

Fig. 1.

EP 0 074 778 A1

Croydon Printing Company Ltd.

This invention relates to soil working apparatus of the kind in which a plurality of working implements are arranged to perform successive soil working operations as the apparatus is moved along the ground.

There are various conventional types of apparatus of this general kind designed for breaking up and compacting the ground to form a seed bed, but these fall short of providing a satisfactory seed bed from unploughed ground in a single pass. An object of the invention is to provide a soil working apparatus which will achieve this in a satisfactory manner.

According to the invention, soil working apparatus comprises a forward plough adapted to loosen soil to a predetermined depth as the apparatus is moved along the ground, a first rotary device disposed rearwardly of the plough and arranged and operable during rotation to crush the previously loosened soil against the substantially undisturbed bed beneath the loosened soil and thereby break up said soil, and a second rotary device disposed rearwardly of the first rotary device and arranged and operable during rotation to further crush and compact the soil broken by said first rotary device.

Preferably, the second rotary device, typically in the form of a roller cage, is driven in rotation by drive means and may conveniently support part of the weight of the apparatus.

The second rotary device is preferably driven in rotation at a speed such that its peripheral speed is faster than would be occasioned simply by free rolling movement thereof along the ground.

In one particularly convenient arrangement, the first rotary device is also driven in rotation by drive means, preferably at a faster speed than the second rotary device.

Typically, the first rotary device is provided with a series of elements each having a plurality of projecting blades or spikes. Preferably, the blades or spikes are laid back so that their outer ends are directed forwardly just prior to entering the soil. This causes them to effect a crushing rather than a digging action.

The invention will now be described, by way of example, with reference to the accompanying drawings in which:-

Figure 1 is a perspective view of one form of the soil working apparatus of the invention;

Figure 2 is a fragmentary view of part of the apparatus of Figure 1, with some components removed for clarity, and

Figure 3 is a diagrammatic side elevation of another embodiment of the apparatus of the invention illustrating the soil-working function thereof.

The apparatus illustrated in the drawings comprises a forward frame 1 and a rear frame 2 which are interconnected for movement as a unit and for relative pivotal movement in a vertical plane by pins 3 passing through links 4 carried by the rear frame and engaging in one of a series of holes 5 provided in mounting blocks 6 secured to the front frame. The relative vertical positions of the two frames may be varied by engaging the pins 3 in different ones of the holes 5. The forward frame 1 carries an upper link 7 and lower links 8 for connection respectively to the upper and lower links of a standard tractor three point linkage to enable the apparatus to be towed along the ground.

The front frame 1 carries a plurality of plough devices 9 depending therefrom, equally spaced across the frame as shown but not essentially so, each device having a pair of mutually angled blades 10 inclined downwardly in the forward direction so as to dig into and lift an upper layer of soil as the apparatus is towed along the ground. Typically, the blades 10 would penetrate to a depth of about 4 inches, leaving the ground below this depth substantially undisturbed. The ploughing depth may be readily set, as required, by providing an appropriate adjustment facility which may conveniently be effected by varying the length of the tractor top link (not shown).

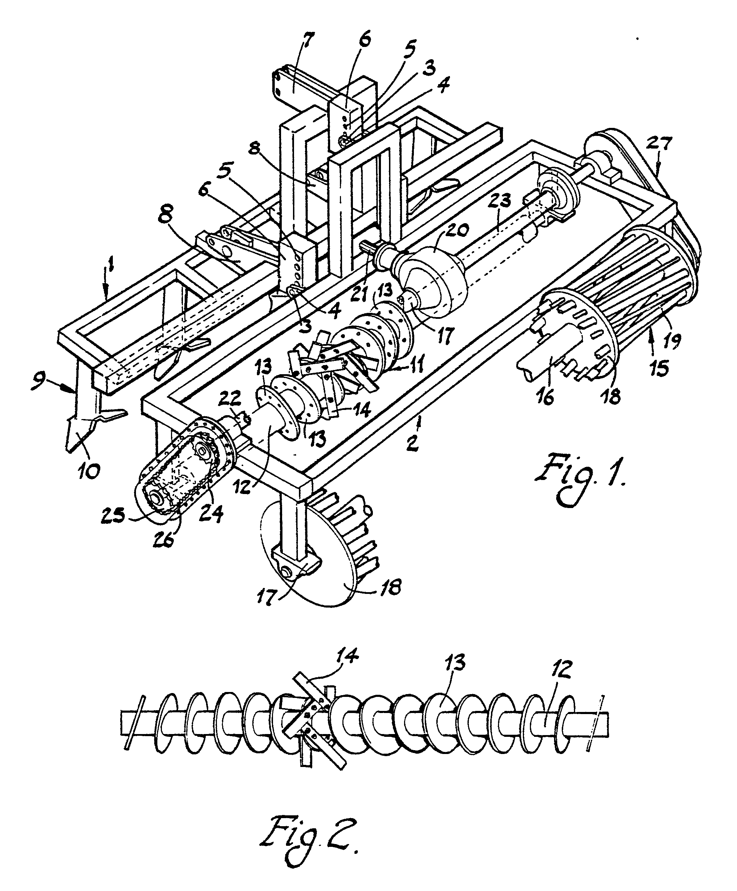

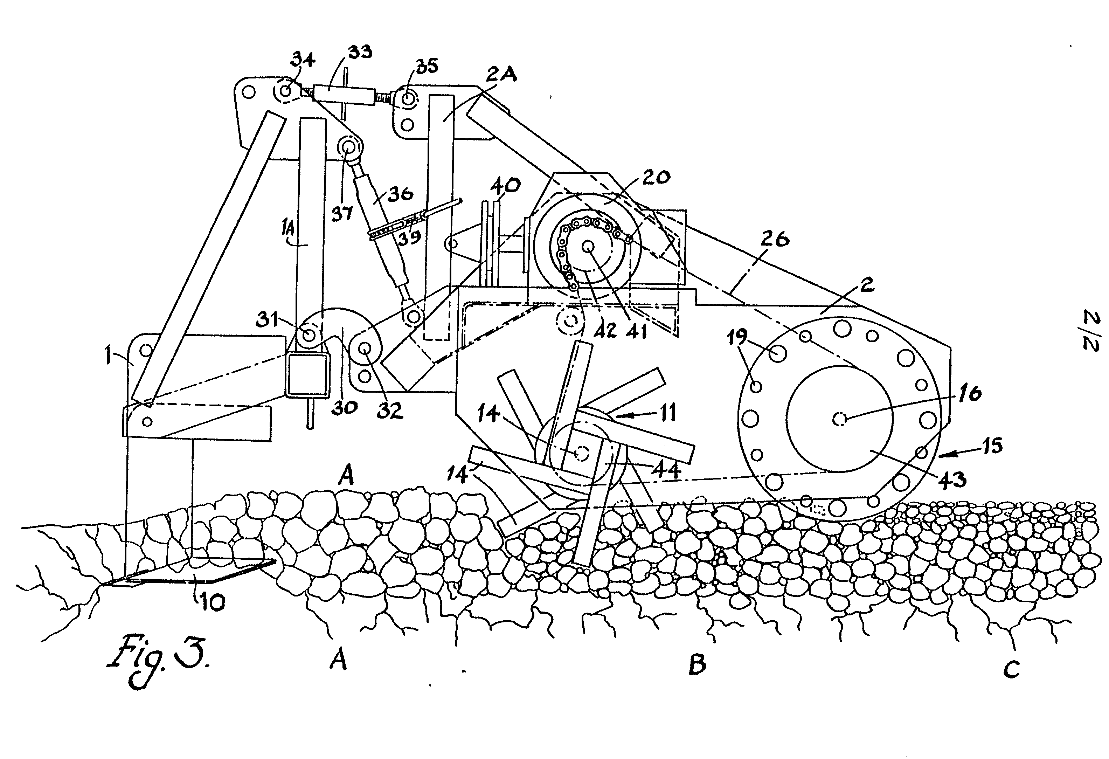

The rear frame 2 carries a first rotary device, indicated generally at 11 and including a rotary shaft 12 on which are mounted discs 13, each carrying a series of blades or spikes 14 which are arranged generally chordally around the discs. In this particular embodiment, each blade 14 extends generally at right angles to its immediately adjacent blades and each disc carries four such blades at either side thereof. Also, as seen more clearly from Figure 2, each disc is angled relative to the axis of the shaft 12. The orientation of the discs relative to a fixed plane of symmetry is varied progressively along the shaft between predetermined limits so that each disc lies in a differently angled plane to the immediately adjacent discs. This has the effect of staggering the blades of adjacent discs circumferentially and thus maintains the rotor torque constant. The blades 14 are omitted from Figure 2 for clarity of illustration.

A second rotary device 15 is mounted at the rear of the frame 2 and, in this embodiment takes the form of a roller cage. This is of conventional type having a central shaft 16 supported for rotation in bearings 17 and carrying a plurality of spaced radial flanges 18 supporting bars 19 arranged generally longitudinally but directed in a shallow spiral around the shaft 16.

A gear box 20 has an input shaft 21 connectible, in use, to the power take off shaft of the towing tractor (not shown), the gear box having a pair of oppositely directed shafts 22 and 23. The shaft 22 extends parallel to the shaft 12 of the rotary device 11 and drives a sprocket 24 which in turn drives the shaft 12 of the rotary device from a sprocket 25 via a chain 26. The shaft 23 drives the rotary device 15 from the gear box 20 via a similar chain and sprocket mechanism 27, of which no details can be seen in the drawing. The gearing in the gear box 20 and/or the relative sizes of the drive sprockets, are chosen so as to effect the desired speeds of rotation respectively of the rotary devices 11 and 15, taking into account the speed of travel of the apparatus over the ground. Generally speaking, it is desirable to drive the rotary device 11 faster than the speed which would result from rolling it along the ground at the speed of forward travel of the apparatus and experience has shown that two and a half times the free rolling speed produces an excellent breakup of the soil. The second rotary device is preferably driven at a slower speed which may typically be one and a half times the free rolling speed of that implement along the ground. The rotary device 15 is preferably used to support the weight of at least the rear frame 2 by contact with the ground, which contributes to the crumbling action of this device on the soil.

The apparatus shown in Figure 3 is basically similar to that shown in Figure 1 and similar parts in the two drawings will be denoted by the same reference numerals. The forward and rear frames 1 and 2 are interconnected in this embodiment by a lower arcuate link 30 having pivotal connections 31 and 32 respectively with the frames 1 and 2 and an upper turnbuckle 33 having respective pivotal connections 34 and 35 with said frames. The angle of the frame 1 relative to the frame 2, and consequently the share angle, can be varied by altering the length of the turnbuckle 33.

A further turnbuckle 36 extends between an uper part of the forward frame and a lower part of the rear frame and has respective pivotal connections 37 and 38 therewith. The turnbuckle 36 provides the facility for altering the height of the frame 1 relative to the frame 2 and consequently the share depth. The link 30 and turnbuckle 33 effectively form opposite sides of a parallel linkage which also includes upright members 1A and 2A respectively of the forward and rear frames so that the share angle remains substantially constant during height adjustment of the forward frame. A handle 39 is provided for rotating the turnbuckle 36 in order to provide said height adjustment.

In this embodiment, the gearbox 20 is connected to the tractor power take-off shaft via a clutch 40 arranged to slip upon the occurrence of excessive torque occasioned, for example, by either of the rotary devices 11 or 15 encountering an obstruction during operation of the apparatus. The gearbox has a single output shaft 41 fast for rotation with a sprocket 42 and drives the rotary devices 11 and 15 by means of a single chain 26 passing around the sprocket 42 and respective sprockets 43 and 44 fast with the shafts 16 and 23 of the rotary devices. The sprocket 43 is connected to the shaft 16 via a clutch device which allows the drive to the roller cage 15 to be interrupted, for the purpose mentioned hereafter.

The effect produced by using the apparatus of the invention is illustrated in Figure 3, from which it can be seen that the blades 10 plough into an upper layer of the ground, usually to a depth of about 4 inches, and leave behind them a quantity of coarsely loosened soil at a region A. This is then contacted by the blades 14 of the first rotary device 11 which, because of the particular manner in which they are angled around the shaft 12, contact the soil along the leading longitudinal edges thereof and thereby act to crush the loosened soil against the relatively solid substantially undisturbed bed lying thereunder. This is found to produce an excellent break-up of the soil, which is enhanced by the peripheral speed chosen for the rotary device 11. This broken soil is left in a region B behind the rotary device 11 and is subsequently contacted by the bars 19 of the second rotary device 15 which acts as a crusher roller, breaking down the soil further and compacting it to produce a level seed bed. Again, the action of the roller is enhanced by its speed of rotation relative to the forward movement of the apparatus.

By disengaging the clutch device, the cage roller may be allowed to roll freely over the ground during progress of the apparatus. The roller then acts more in the manner of a packer, producing a firmer top surface to the bed at region C than does the driver roller.

The precise forms and arrangements of the components of the apparatus, such as blades 10 and 14, may vary widely depending on the conditions of use and the effect required. Also the shape and construction of the main structure of the apparatus, such as the frames 1 and 2, may be varied as appropriate.

It will be seen that the apparatus of the invention is capable of treating ground immediately after harvesting and producing a seed bed in a single pass. This is economical not only in terms of working time but results in a minimum loss of moisture during the cultivating process because of the swift succession with which the various stages of soil treatment are brought into effect.

**0074778**

## C L A I M S

1. A soil working apparatus comprising a forward plough adapted to loosen soil to a predetermined depth as the apparatus is moved along the ground, a first rotary device disposed rearwardly of the plough and arranged and operable during rotation to crush the previously loosened soil against the substantially undisturbed bed beneath the loosened soil and thereby break-up said soil, and a second rotary device disposed rearwardly of the first rotary device and arranged and operable during rotation to further crush and compact the soil broken by said first device.

2. Apparatus according to Claim 1 wherein said second rotary device is driven in rotation by drive means.

3. Apparatus according to Claim 1 or Claim 2 wherein said second rotary device supports part of the weight of the apparatus.

4. Apparatus according to any one of Claims 1 to 3 wherein said second rotary device is in the form of a roller cage.

5. Apparatus according to any one of Claims 2 to 4 wherein the second rotary device is driven in rotation at a speed such that its peripheral speed is faster than would be occasioned simply by free rolling movement thereof along the ground.

6. Apparatus according to any one of Claims 1 to 5 wherein the first rotary device is also driven in rotation by drive means.

7. Apparatus according to Claim 6 wherein the first rotary device is driven at a faster speed than the second rotary device.

8. Apparatus according to any one of the preceding claims wherein the first rotary device is provided with a series of elements each having a plurality of projecting blades or spikes.

9. Apparatus according to Claim 8 wherein the blades or spikes are laid back so that their outer ends are directed forwardly just prior to entering the soil.

10. Apparatus according to any one of the preceding claims comprising forward and rear frames connected together so as to be relatively pivotable about an axis generally transverse to the direction of working movement of the apparatus, the forward frame carrying the plough and the rear frame carrying the first and second rotary elements.

11. Apparatus according to Claim 10 wherein the frames are adjustable relative to each other in height.

12. Apparatus according to Claim 11 wherein the frames are pivotally connected together by upper and lower links forming part of a parallel linkage whereby the share angle of the plough remains substantially constant during height adjustment of the forward frame.

- 11 -

0074778

13. Apparatus according to Claim 12 wherein said upper link is adjustable in length in order to alter the share angle of the plough.

14. Apparatus according to any of the preceding claims wherein the second rotary device is driven via a clutch device selectively operable to interrupt drive to said second device.

15. Soil working apparatus substantially as hereinbefore described with reference to Figures 1 and 2 or Figure 3 of the accompanying drawings.

Fig. 1.

Fig. 2.

Fig. 3.

# EUROPEAN SEARCH REPORT

**European Patent Office**

| | DOCUMENTS CONSIDERED TO BE RELEVANT | | CLASSIFICATION OF THE APPLICATION (Int. Cl. ³) |
|---|---|---|---|
| Category | Citation of document with indication, where appropriate, of relevant passages | Relevant to claim | A 01 B 49/02 |
| X | GB - A - 1 471 166 (C.v.d. LELY N.V.) <br> * claim 1 ; fig. 1, 2 * <br> -- | 1,3,4, 6,10- 13 | |
| X | DE - A1 - 3 004 576 (MASCHINENFABRIK RAU GMBH) <br> * claims 1, 8 to 10, 17, 18 ; fig. 1, 5 * <br> -- | 1,3,6, 10-12 | **TECHNICAL FIELDS SEARCHED (Int.Cl. ³)** |
| X | AT - B - 318 267 (H. PRILLINGER LANDMASCHINENFABRIK) <br> * claims 1, 3 ; fig. 1 * <br> -- | 1,3,6, 10-12 | A 01 B 49/00 |
| X | DE - A1 - 2 839 601 (E. WEICHEL) <br> * claims 1, 2 ; fig. 1, 2 * <br> -- | 1,4,6, 10,11 | |
| X | DE - A1 - 2 719 713 (C. LUTZ) <br> * claim 1 ; fig. 1 * <br> -- | 1,3,6, 9 | |
| X | AT - B - 363 267 (F. HAFNER & SÖHNE) <br> * page 3 ; fig. 1 * <br> ---- | 1,3,6, 10 | **CATEGORY OF CITED DOCUMENTS** |

The present search report has been drawn up for all claims

| Place of search | Date of completion of the search | Examiner |
|---|---|---|
| Berlin | 16-11-1982 | SCHOFER |

EPO Form 1503.1 06.78